# EUROPEAN PATENT SPECIFICATION

(11) **EP 4 191 771 B1**
(45) Date of publication and mention of the grant of the patent: **15.10.2025**
(21) Application number: 22211710.3
(22) Date of filing: 06.12.2022
(51) Int. Cl.: H01M 50/244, H01M 50/247, H01M 50/262, H01M 50/296

(54) **A BATTERY PACK AND HOUSING ASSEMBLY FOR BATTERY PACKS**
BATTERIEPACK UND GEHÄUSEANORDNUNG FÜR BATTERIEPACKS
BLOC-BATTERIE ET ENSEMBLE BOÎTIER POUR BLOCS-BATTERIES

(30) Priority: 06.12.2021 CN 202111479173
(43) Date of publication of application: 07.06.2023
(73) Proprietor: Techtronic Cordless GP, Anderson, SC 29621 (US)
(72) Inventor: LIU, Ya Bin, Anderson, 29621 (US); ZHAO, Jiang, Anderson, 29621 (US); ZHAO, Jian Guo, Anderson, 29621 (US)
(74) Representative: Meissner Bolte Partnerschaft mbB

(56) References cited:
- EP-B1- 2 421 071
- EP-B1- 2 511 970
- US-A1- 2020 176 724
- US-A1- 2020 274 116
- US-A1- 2021 057 686

## Description

### Technical field

The present invention relates to electrical energy storage devices, and in particular to a battery pack and a housing assembly for battery packs.

### Background Art

A battery pack is usually used as an energy supply device where there is no fixed power supply or where direct power supply is not convenient, for example, with household cleaning equipment, kitchen equipment or medical equipment that needs to be frequently moved. In the process of power supply or charging, it is not only expected that the battery pack is convenient to install, but also that the battery pack remains fixed relative to a compatible device (for example, a power consuming device or a charging device), so as to form a stable electrical connection between the two. Also, it is desirable to be able to easily remove the battery pack from the compatible device when the battery is not needed. At the same time, in household equipment, the installation space of the equipment is usually required to be as compact as possible.

Therefore, how to meet one or more of the above requirements is an issue that needs to be addressed during the design of battery packs.

US 2020/274116 A1, EP 2 421 071 B1, US 2021/057686 A1, EP 2 511 970 B1 and US 2020/176724 A1 disclose latch mechanisms for removable battery packs.

### Summary of the invention

The purpose of the present invention is to provide a battery pack and a housing assembly for the battery pack, so that the battery pack can be easily removed from a compatible device even in a compact installation space, while ensuring a stable electrical connection when it is installed. The present invention is defined by independent claim 1 as appended. Further preferable embodiments are given in the dependent claims.

According to the present invention, a housing assembly for a battery pack is provided, the battery pack can be plugged into a compatible device along a plugging direction, and the housing assembly comprises:
a housing, which is used to accommodate batteries; and
a latch mechanism, which can operably lock the battery pack relative to the compatible device, and which comprises an actuator, which can move along a first direction perpendicular to the plugging direction to unlock the latch mechanism,
wherein either the housing or the actuator is provided with gears, the other is provided with racks extending along the first direction, and, when the actuator is installed in place, the gears engage the racks to guide the actuator to move in the first direction.

According to this solution, the movement of the actuator is guided by the transmission cooperation between the gears and the racks, so that the actuator can move uniformly as a whole, thus reducing the shaking and sticking caused by the uneven force on different parts when the actuator is actuated.

In one embodiment, the number of the gears is at least two, and the gears are arranged along a second direction perpendicular to the first direction.

According to this solution, more than two gears are provided, and the other gears will follow when at least one gear is actuated, thereby the force on the entire actuator is more balanced, the actuator moves more smoothly, and shaking and sticking is effectively reduced.

In one embodiment, the racks are in one-to-one correspondence with the gears.

According to this solution, the same number of gears and racks can be provided, which can further balance the force on different parts of the actuator, so that the actuator is better guided.

In one embodiment, at least two gears rotate in opposite directions when the actuator moves.

According to this solution, rotating in the opposite directions means that the two gears engage the rack on two opposite sides respectively, which is beneficial for the actuator to be under a uniform force in the direction perpendicular to the second direction.

In one embodiment, two gears that rotate in opposite directions engage each other, or two gears that rotate in opposite directions respectively engage two sides of the same rack.

According to this solution, two gears that rotate in opposite directions engage each other or engage the same rack, which can force the other gears to follow when one gear is actuated, further optimizing the guiding effect on the movement of the actuator.

In one embodiment, the housing or the actuator provided with the racks is also provided with a limiting member, and, when the actuator is installed in place, the limiting member abuts a surface of the gears to limit the movement of the gears along the axis of rotation thereof.

According to this solution, play of the gears forward and backward along the axis of rotation can be prevented.

In one embodiment, the housing has an enclosed first accommodating chamber and an open second accommodating chamber located on one end, the batteries are disposed in the first accommodating chamber, and the gears or racks are disposed in the second accommodating chamber.

According to this solution, it can be ensured that the batteries are located in a relatively enclosed space protected against humidity and dust, and at the same time gears or racks or other structures can be conveniently provided with the second accommodating chamber.

In one embodiment, the actuator is constructed as a plate structure, and an inner side of the actuator abuts an end surface of the housing and covers an opening of the second accommodating chamber.

According to this solution, by covering the opening with the actuator, the second accommodating space can be separated from the external environment most of the time, thus preventing foreign matter from entering it and causing the gears and the racks to be stuck in transmission.

According to another aspect of the present invention, a battery pack is also provided, the battery pack comprises batteries and the housing assembly as described above, and the housing assembly accommodates the batteries.

The battery pack according to this solution can achieve the same technical effects as those of the housing assembly described above.

### Brief description of the drawings

To better understand the above and other objectives, features, advantages and functions of the present invention, the preferred embodiments shown in the drawings may be referred to. In the drawings, identical reference labels denote identical components. Those skilled in the art should understand that the drawings are intended to illustrate preferred embodiments of the present invention schematically, and have no limiting effect on the scope of the present invention, and the various components in the drawings are not drawn to scale.
Figure 1 is a space view of the battery pack according to a first embodiment not part of the present invention;
Figure 2 is a space exploded view of the battery pack as shown in Figure 1;
Figure 3 is a space view of the battery pack as shown in Figure 1 from another perspective;
Figure 4 is a space view of the battery pack as shown in Figure 1 from another perspective, wherein the latch mechanism is removed from the housing;
Figure 5 is a vertical profile view along line A-A in Figure 3;
Figure 6 is a vertical profile view along line B-B in Figure 3;
Figure 7 is a space view of the actuator and the lug of the battery pack as shown in Figure 1;
Figure 8 is a detail vertical profile view of the battery pack according to a second embodiment not part of the present invention;
Figure 9 is a space view of the battery pack housing according to a third embodiment of the present invention; and
Figure 10 is a space view of the actuator of the battery pack as shown in Figure 9;
Figures 11 to 13 are schematic diagrams of a number of cooperation methods between gears and racks of the battery pack housing according to the third embodiment of the present invention.

### Numerals in the drawings:

1 battery pack
10 and 10" housing
11 top cover
111 table portion
112 plug-in groove
113 plug-in guide rail
12 base
13 inner cover
14 and 14" second accommodating chamber
141 first rib
142 guide groove wall
143 guide groove
144 second rib
20 batteries
30 circuit board
31 electrical terminal
34 plug-in interface
50 and 50' latch mechanism
51, 51' and 51" actuator
511 and 511' recess
512 pressing arm
513 fin
514 guide rail
515 third rib
516 gear
517 rack
518 limiting member
52 and 52' lug
521 guide surface
53 and 53' bias
AX plug-in axis
F0 plugging direction
F1 first direction
F2 second direction

### Detailed Description of the Embodiments

Particular embodiments of the present invention are now described in detail with reference to the drawings. The embodiments described here are merely preferred embodiments of the present invention. Based on these preferred embodiments, those skilled in the art will be able to think of other ways in which the present invention could be implemented, all of which likewise fall within the scope of the present invention.

The present invention provides a battery pack for providing electric energy for an electric device and a housing assembly for the battery pack. Among them, the electric device, as a compatible device of the battery pack, may be, for example, household cleaning equipment, kitchen equipment, medical equipment, etc. The battery pack according to the present invention will be described in detail below in conjunction with the accompanying drawings.

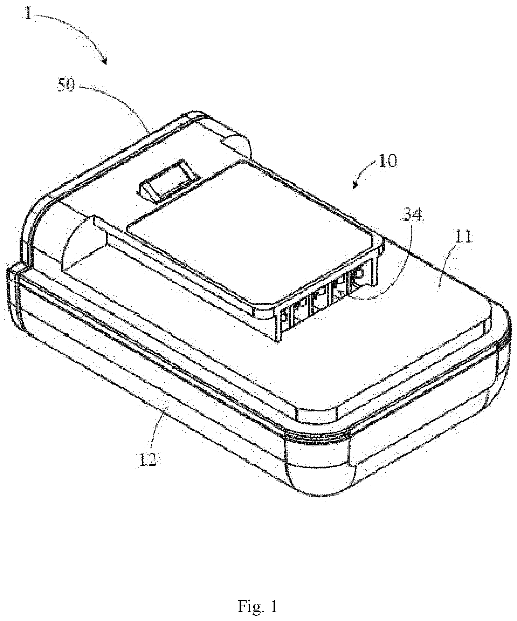

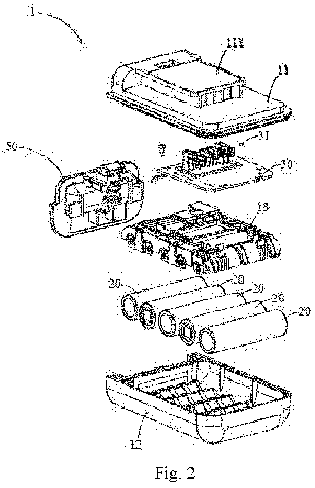

As shown in Figures 1 and 2, the housing assembly according to a preferred embodiment, which is not part of the present invention but helps understand the invention, comprises a housing 10 and a latch mechanism 50 coupled to the housing 10. An accommodating space is formed in the housing 10, and a plurality of individual batteries 20 can be arranged in the accommodating space in a specific desired manner, with a circuit board 30 electrically connected to the plurality of individual batteries 20 to form a battery pack 1. The circuit board 30 is provided with a plurality of electrical terminals 31. The battery pack 1 may be electrically connected to the electric device through the electrical terminals 31 for the functions of power supply and communication with the electric device. In the case that the battery 20 is a rechargeable battery, the battery pack 1 may also be electrically connected to a charging device through the electrical terminals 31 for the functions of charging and communication with the charging device. Among them, both the electric device and the charging device may be referred to as compatible devices for the battery pack 1.

Continuing to refer to Figure 2, the housing 10 may comprise a top cover 11, a base 12 and an inner cover 13. Among them, the top cover 11 and the base 12 are connected, and the above accommodating space is formed between the two. It can be understood that the battery 20, the circuit board 30 and the connecting circuits not shown in the battery pack 1 are all relatively sensitive to water, dust, etc., and therefore the accommodating space formed by the top cover 11 and the base 12 is enclosed relative to the outside. In a first embodiment, the top cover 11 and the base 12 may be connected and fixed by ultrasonic welding at the closing edges, so that the accommodating space is completely isolated from the outside. This is very advantageous when the battery pack 1 is used in an environment with high humidity or dust levels.

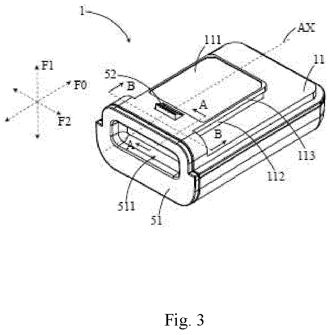

For the convenience of description, Figure 3 shows the three directions in a Cartesian coordinate system, and the description below is based on these three directions, wherein the plugging direction of the battery pack 1 into a compatible device is F0, the plug-in axis is defined as AX, and the other two directions orthogonal to the plugging direction F0 are respectively the first direction F1 and the second direction F2.

When the battery pack 1 is connected to a compatible device, the latch mechanism 50 can cooperate with the corresponding locking mechanism on the compatible device to lock the battery pack 1 on the compatible device, so that the relative position between the two remains fixed, thereby forming a stable electrical connection. The battery pack and the compatible device may be in a plugging fit, as shown in Figure 3, the battery pack 1 is constructed to be connected to a compatible device by being plugged into the compatible device along the plugging direction F0. It can be understood that the battery pack 1 can be withdrawn from the compatible device when it is moved in the opposite direction to the plugging direction F0.

The top of the housing 10 is provided with an outwardly protruding table portion 111 at a position corresponding to the electrical terminals 31. A recessed cavity is formed inside the table portion 111 to accommodate the electrical terminals 31. In addition, an opening is provided on a side of the table portion 111, so that the electrical terminals 31 are exposed to the outside, to form a plug-in interface 34 electrically connected to an electric device or a charging device. When the battery pack 1 is plugged into place on a compatible device, it can be electrically connected to the electrical circuit of the compatible device through the electrical terminals 31.

Preferably, the table portion 111 is provided with a plug-in groove 112 and a plug-in guide rail 113 extending along the plugging direction F0. Correspondingly, the locking mechanism of the compatible device may comprise a receiving guide rail and/or a receiving groove, and the battery pack 1 can be positioned and fixed through the cooperation between the plug-in groove 112 and the receiving guide rail and the cooperation between the plug-in guide rail 113 and the receiving groove. Of course, it can be understood that only one of the plug-in groove 112 and the plug-in guide rail 113 may be provided, and only one of the matching receiving guide rail and the receiving groove may be provided on the locking mechanism of the compatible device.

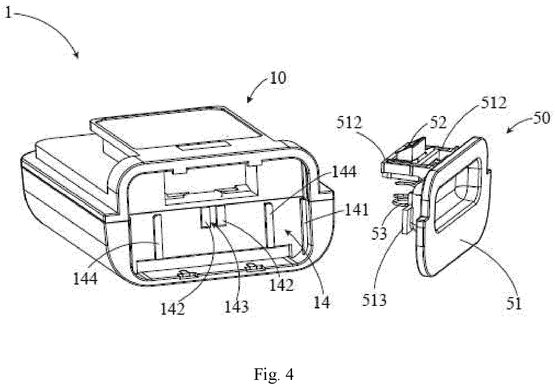

With reference to Figure 4, the latch mechanism 1 of the housing assembly comprises a lug 52, an actuator 51 and a bias 53. Among them, the lug 52 protrudes outward in a retractable manner relative to the housing 10 along the first direction F1. That is, although the lug 52 is shown in the state of protruding from the housing 10 in the figure, the lug 52 may also be retracted into the housing 10. When the battery pack 1 is being plugged into a compatible device along the plugging direction F0, the lug 52 can be in the retracted state, and when it is plugged in place, the lug 52 protrudes and cooperates with the locking mechanism of the compatible device for locking. The locking mechanism may specifically be a stopper, a notch, etc.

The bias 53 can apply a biasing force, so that the lug 52 protrudes and stays protruding outward from the housing 10. The actuator 51 is coupled with the lug 52, and is used for actuating the lug 52 to retract along the first direction F1, so as to release the lock between the battery pack 1 and the compatible device. Specifically, the actuator 51 is disposed such that it can move along the first direction F1. When the actuator 51 moves along the first direction F1, the lug 52 is retracted in response to the movement of the actuator 51. Preferably, the lug 52 has an inclined guide surface 521 on the side facing the plugging direction F0.

Continuing to refer to Figure 4, the housing 10 is provided with an open accommodating chamber for the latch mechanism 50. To distinguish between them, the accommodating space of the housing 10 for accommodating the batteries 20 may be referred to as the first accommodating chamber, and the accommodating chamber for the latch mechanism 50 here may be referred to as the second accommodating chamber, denoted by reference numeral 14. It can be understood that the first accommodating chamber is kept enclosed relative to the second accommodating chamber, so as to ensure that the batteries are located in a relatively enclosed, moisture-proof and dust-proof space.

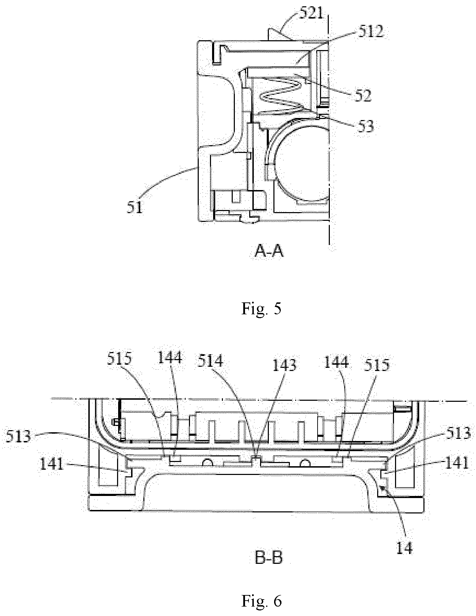

In a preferred embodiment, the actuator 51 and the lug 52 are constructed as separate structures. The actuator 51 is constructed essentially as a plate structure. As shown in Figure 3, when assembled in place, the actuator 51 is perpendicular to the plug-in axis AX, and can cover the opening of the second accommodating chamber 14, so that the second accommodating chamber is also a relatively enclosed space when the actuator 51 is in the natural state (i.e., when it is not acting on the lug 52), thereby blocking dust, etc. With reference to Figure 6, the actuator 51 abuts the end surface of the housing 10 toward the inner side surface of the second accommodating chamber 14. On the inside of the actuator 51, the lug 52 is located in the second accommodating chamber 14, is offset inwardly along the plugging direction F0 relative to the actuator 51, and protrudes upward from the top of the housing 10.

As shown in Figures 4, 5 and 7, the actuator 51 further has a pressing arm 512 extending along the plugging direction F0. In the embodiment shown in the figure, there is a pair of pressing arms 512, and the pressing arms 512 are located on the two sides of the lug 52 and can press the shoulders of the lug 52. Of course, only one or more than two pressing arms may be provided as needed. The bias 53 may be a spring or another biasing member, which is disposed under the lug 52 to directly apply a biasing force to the lug 52. In the natural state, the lug 52 protrudes from the top of the housing 10 under the action of the biasing force. When the user moves the actuator 51 along the first direction F1, the pressing arm 512 presses against the lug 52 and drives it to move along the first direction F1 as well. In this way, the lug 52 is retracted. At this point, the battery pack 1 can be moved in the plugging direction F0 in order to remove it from the compatible device.

The advantage of such a split structure is that both the actuator 51 and the lug 52 can move relatively independently. When the lug 52 is retracted by moving along the first direction F1, the actuator 51 can remain stationary. When the actuator 51 is actuated in the first direction F1, the pressing arm 512 is pressed against the lug 52, and the lug 52 is forced to move simultaneously with the actuator 51. This arrangement is advantageous when the battery pack is plugged into a compatible device. Usually, when assembling the battery pack, the user will hold one end of the battery pack with fingers, etc. and plug the battery pack into a compatible device along the plugging direction F0. The actuator 51 abuts the end face of the housing of the battery pack under the pressure of the fingers, and the frictional force between the two is relatively large, so that it is difficult to move the actuator 51 relative to the housing. With the above split structure, the lug 52 can move freely along the first direction F1 independent of the actuator 51, so as to lock the battery pack with a compatible device. Therefore, the assembling of the battery pack is more convenient.

Preferably, the actuator 51 has a recess 511, and the recess 511 is located on a side facing away from the second accommodating chamber 14. The recess 511 may be used as an acting point for the user to operate the actuator 51. At the same time, the recess 511 not only saves the external space, but also can increase the structural strength of the actuator 51, while preventing the appearance of any protruding structure outside the battery pack.

With reference to Figures 4 and 6, the side wall of the second accommodating chamber 14 is provided with a first rib 141 extending along the first direction F1, and correspondingly, the inner side of the actuator 51 is provided with fins 513. In the state where the actuator 51 is assembled in place, along the plugging direction F0, the fins 513 are located on the inside of the first rib 141, and the two abut each other. Furthermore, the inner side of the actuator 51 abuts the end of the housing 10. Therefore, the two abutting forces can limit the actuator 51 along the plugging direction F0.

In addition, preferably, a guide groove 143 is further provided in the second accommodating chamber 14, which is formed by two guide groove walls 142 spaced along the second direction F2 and extending along the first direction F1. The inner side surface of the actuator 51 is provided with a guide rail 514 extending along the first direction F1. The guide rail 514 is located in the guide groove 143 for guiding the movement of the actuator 51 along the first direction F1. At the same time, the cooperation between the guide groove 143 and the guide rail 514 can also play a limiting role along the second direction F2 to a certain extent.

Further, two second ribs 144 extending along the first direction F1 are provided on the end surface of the second accommodating chamber 14 facing the actuator 51. The two second ribs 144 are spaced along the second direction F2. Accordingly, the inner side surface of the actuator 51 is provided with two third ribs 515 extending along the first direction F1. The two third ribs 515 are spaced along the second direction F2. In a state where the actuator 51 is assembled in place, the two second ribs 144 are located between the two third ribs 515, and the corresponding second rib 144 and third rib 515 abut each other, so as to guide and limit the actuator 51 along the second direction F2. Of course, it is also possible to dispose the third ribs 515 between the second ribs 144. Here, two second ribs and two third ribs are respectively provided as an example, but the numbers of second ribs and third ribs are not limited and may be selected as required.

It can be understood that there are limiting fits in a plurality of directions between the actuator 51 and the second accommodating chamber 14 of the housing 10. To facilitate the assembling of the actuator 51, the actuator 51 may be assembled in place when the top cover 11 and the base 12 are still a split structure, and then the top cover 11 and the base 12 are joined by ultrasonic welding. This greatly facilitates assembly.

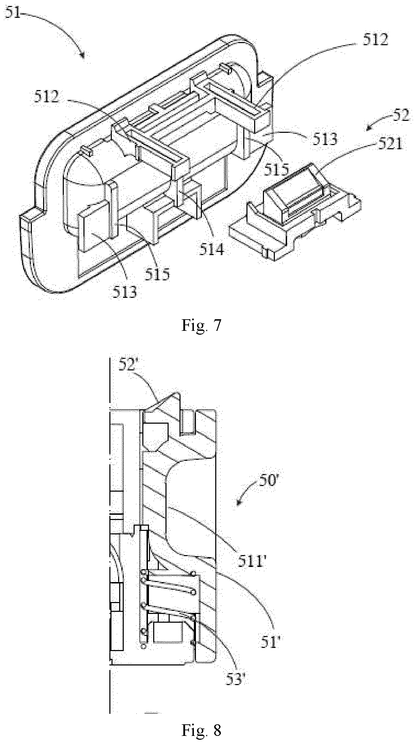

Figure 8 shows a second embodiment not part of the present invention. In the embodiment, the actuator 51' and the lug 52' of the latch mechanism 50' are constructed as an integral structure. Specifically, the lug 52' extends from a side wall (for example, the upper side wall) of the recess 511' along the first direction F1, and the bias 53' is disposed between the side wall (for example, the lower side wall) of the recess 511' opposite to the side wall and the housing. In this embodiment, the bias 53' acts indirectly on the lug 52' by applying a biasing force on the actuator 51'. Here, no pressing arm structure is needed. Other structures are the same as those in the embodiment described above.

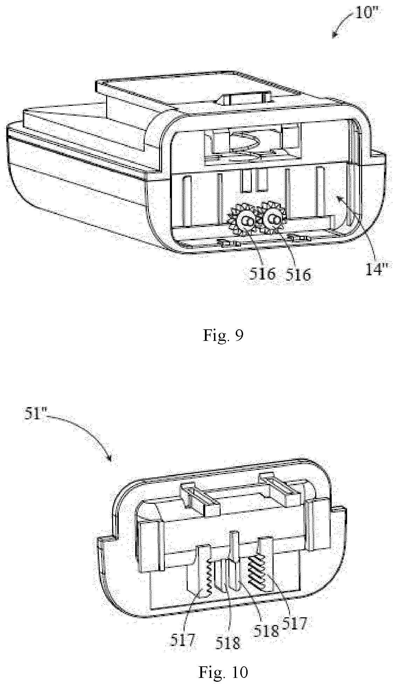

Figures 9 to 13 show a third embodiment of the present invention. In this embodiment, the movement of the actuator 51" along the first direction F1 is guided and limited by the engagement of the gears and racks. Specifically, a gear 516 is provided in the second accommodating chamber 14" of the housing 10", and the gear 516 can rotate about a rotation axis (not shown). Accordingly, the side of the actuator 51" facing the second accommodating chamber 14" is provided with a rack 517 extending parallel to the first direction F1. When the actuator 51" is installed in place, the gear 516 engages the rack 517, so that the rack 517 drives the gear 516 to rotate when the actuator 51" moves. Such engagement between the gear 516 and the rack 517 can guide the movement of the actuator 51" along the first direction F1. Through such a guiding effect, the movement of the actuator is smoother. This is especially applicable when a wide portion of the actuator (for example, the recess 511) is under force which acts at concentrated points and it is difficult to distribute the force evenly on the portion under the force. This is because, when a wide portion is under force, the user is likely to apply force at a non-central position (for example, on the left or the right), resulting in uneven force on the actuator, which may lead to interference and wear of one side of the guide rail and the guide groove. The rack and gear structure can provide smooth guidance, thus preventing such a problem. The actuator can move smoothly even if the user acts on the left or right of the portion to be acted on.

Preferably, there are at least two gears 516, which are arranged along the second direction F2 perpendicular to the first direction F1. In this way, even if only one gear 516 rotates in response to the force applied on the actuator 51", due to the engagement and transmission between the gear and the rack, the other gears 516 will be forced to rotate along with it, so that the force on the entire actuator 51" is more balanced, the movement is smoother, and shaking and sticking can be effectively reduced.

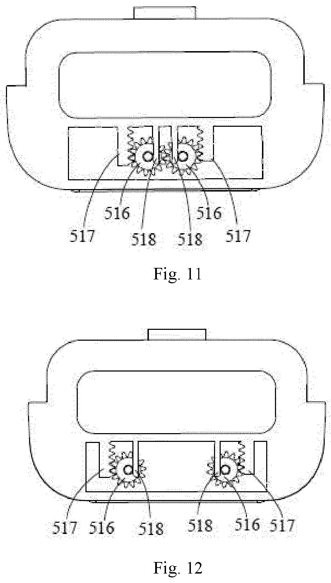

The racks 517 may also be in one-to-one correspondence with the gears 516. Specifically, at least two gears 516 may engage the corresponding racks 517 on their respective opposite sides along the second direction F2. For example, as shown in Figures 11 and 12, along the second direction F2, two gears 516 are located between two corresponding racks 517. Alternatively, two racks 517 corresponding to the two gears 516 may be located between the two gears 516. In this way, the force on the actuator 51" along the second direction F2 can be balanced and cancelled, so that the actuator 51" can move along the first direction F1 uniformly as a whole. The two gears 516 here rotate in opposite directions. It can be understood that the number of gears and racks can be set as required.

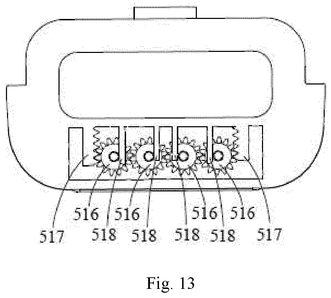

As shown in Figure 11, the gears 516 rotating in opposite directions can directly engage each other, so that when at least one gear 516 is actuated, the other gear 516 follows synchronously, thus further optimizing the guiding effect on the actuator 51". Preferably, as shown in Figure 13, when the distance between the two racks 517 is relatively far, a plurality of gears 516 may also be provided to engage each other for transmission, so that the gears 516 that respectively engage the two racks 517 finally engage each other indirectly through the transmission gear 516 to form linkage. Here, the number of the racks 517 may be smaller than the number of the gears 516.

In addition, in variation embodiments not shown, a tooth structure may also be provided on both sides of the rack 517, and two gears 516 clamp the rack 517 between them. Thus, the rack 517 is acted on by the interaction forces from the gears 516, and such interaction forces are in opposite directions along the second direction F2, so they can offset each other, and therefore the actuator 51" only receives the resultant force along the first direction F1, and thus can move along the first direction F1 uniformly as a whole without sticking. At this point, the two gears 516 that engage the same rack 517 rotate in opposite directions.

Further, as shown in Figures 10 to 13, the actuator 51" is also provided with a limiting member 518. For example, the limiting member 518 may be a long cylindrical structure. When the rack 517 engages the gear 516, the limiting member 518 abuts the end face of the gear 516. The gear 516 is clamped between the bottom surface of the second accommodating chamber 14" and the limiting member 518. This can limit the movement of the gear 516 along its axis of rotation and prevent it from playing back and forth.

It can be understood that, as an alternative embodiment, it is also possible to arrange a gear on the actuator and a rack in the second accommodating chamber, or to arrange a gear and rack structure on both. The guide structure with engagement between gears and racks described in this embodiment may also be provided alone, or provided and used together with the guide structure shown in Figures 3 to 7. In addition to locking with the lug, the guide structure with engagement between gears and racks may also be applied to any other form of latch mechanisms that can be unlocked by guiding the movement of the actuator.

In the above description, the top direction of the housing is taken as the first direction. However, the first direction is not limited thereto, and may be any direction perpendicular to the plugging direction. In addition, it can be understood that, in the cooperation means between the guide groove and the guide rail and between the plug-in groove and the receiving rail, the positions of the corresponding structures may be interchanged as long as their cooperation is not affected.

## Claims

1. Housing assembly for a battery pack that can be plugged into a compatible device along a plugging direction (F0), the housing assembly comprising:
a housing (10"), which is used to accommodate batteries (20); and
a latch mechanism (52, 52'), which can operably lock the battery pack relative to the compatible device, and which comprises an actuator (51"), which can move by a user operation along a first direction (F1) perpendicular to the plugging direction (F0) to unlock the latch mechanism (52, 52'),
**characterised in that** either the housing (10") or the actuator (51") is provided with gears (516), the other is provided with racks (517) extending along the first direction (F1), and, when the actuator (51") is installed in place, the gears (516) engage the racks (517) to guide the actuator (51") to move in the first direction (F1).

2. Housing assembly according to Claim 1, wherein the number of the gears (516) is at least two, the gears (516) are arranged along a second direction (F2) perpendicular to the first direction (F1), preferably, the racks (517) are in one-to-one correspondence with the gears (516), and preferably, at least two gears rotate (516) in opposite directions when the actuator (51") moves.

3. Housing assembly according to Claim 2, wherein at least two gears (516) rotate in opposite directions when the actuator (51") moves, and preferably, two gears (516) that rotate in opposite directions mesh, or two gears (516) that rotate in opposite directions respectively mesh with one side of the same rack (517).

4. Housing assembly according to any of Claims 1 to 3, wherein the housing has an enclosed first accommodating chamber and an open second accommodating chamber (14") located on one end, the batteries (20) are provided in the first accommodating chamber, the gears (516) or the racks (517) are provided in the second accommodating chamber (14"), and preferably, the actuator (51") is constructed as a plate structure, and an inner side of the actuator (51") abuts an end surface of the housing and covers an opening of the second accommodating chamber (14").

5. Battery pack comprising batteries (20),
**characterised by** further comprising the housing assembly according to any of Claims 1 to 4, which accommodates the batteries (20).

## Patentansprüche

1. Gehäuseanordnung für ein Batteriepack, das entlang einer Steckrichtung (F0) in ein kompatibles Gerät gesteckt werden kann, wobei die Gehäuseanordnung umfasst:
ein Gehäuse (10"), das verwendet wird, Batterien (20) aufzunehmen; und
einen Verriegelungsmechanismus (52, 52'), der das Batteriepack relativ zu dem kompatiblen Gerät funktionsfähig verriegeln kann und der ein Bedienteil (51") umfasst, der sich durch eine Benutzerbetätigung entlang einer ersten Richtung (F1) senkrecht zur Einsteckrichtung (F0) bewegen kann, um den Verriegelungsmechanismus (52, 52') zu entriegeln,
**dadurch gekennzeichnet, dass** entweder das Gehäuse (10") oder das Bedienteil (51") mit Zahnrädern (516) versehen ist, wobei das andere mit Zahnstangen (517) versehen ist, die sich entlang der ersten Richtung (F1) erstrecken, und, wenn das Bedienteil (51") an Ort und Stelle installiert ist, die Zahnräder (516) in die Zahnstangen (517) eingreifen, um das Bedienteil (51") zu führen, sich in der ersten Richtung (F1) zu bewegen.

2. Gehäuseanordnung gemäß Anspruch 1, wobei die Anzahl der Zahnräder (516) mindestens zwei beträgt, die Zahnräder (516) entlang einer zweiten Richtung (F2) senkrecht zur ersten Richtung (F1) angeordnet sind, vorzugsweise die Zahnstangen (517) in Eins-zu-Eins-Entsprechung mit den Zahnrädern (516) sind, und vorzugsweise mindestens zwei Zahnräder (516) in entgegengesetzte Richtungen drehen, wenn sich das Bedienteil (51") bewegt.

3. Gehäuseanordnung gemäß Anspruch 2, wobei sich mindestens zwei Zahnräder (516) in entgegengesetzte Richtungen drehen, wenn sich das Bedienteil (51") bewegt, und wobei vorzugsweise zwei Zahnräder (516), die sich in entgegengesetzte Richtungen drehen, ineinandergreifen oder zwei Zahnräder (516), die sich in entgegengesetzte Richtungen drehen, jeweils mit einer Seite derselben Zahnstange (517) ineinandergreifen.

4. Gehäuseanordnung gemäß einem der Ansprüche 1 bis 3, wobei das Gehäuse eine geschlossene erste Aufnahmekammer und eine offene zweite Aufnahmekammer (14") an einem Ende angeordnet aufweist, die Batterien (20) in der ersten Aufnahmekammer vorgesehen sind, die Zahnräder (516) oder die Zahnstangen (517) in der zweiten Aufnahmekammer (14") vorgesehen sind, und vorzugsweise das Bedienteil (51") als Plattenstruktur konstruiert ist, und eine Innenseite des Bedienteils (51") an eine Endfläche des Gehäuses anstößt und eine Öffnung der zweiten Aufnahmekammer (14") abdeckt.

5. Batteriepack, umfassend Batterien (20), **dadurch gekennzeichnet, dass** es ferner die Gehäuseanordnung gemäß einem der Ansprüche 1 bis 4 umfasst, die die Batterien (20) aufnimmt.

## Revendications

1. Assemblage de boîtier pour un bloc-batterie qui peut être enfiché dans un dispositif compatible le long d'une direction d'enfichage (F0), l'assemblage de boîtier comprenant :
un boîtier (10") qui est utilisé pour recevoir des batteries (20) ; et
un mécanisme de verrouillage (52, 52') qui peut bloquer le bloc-batterie de manière fonctionnelle relativement au dispositif compatible, et qui comprend un actionneur (51") qui peut se déplacer via un actionnement d'utilisateur le long d'une première direction (F1) perpendiculaire à la direction d'enfichage (F0) pour débloquer le mécanisme de verrouillage (52, 52'),
**caractérisé en ce que** l'un ou l'autre du boîtier (10") ou de l'actionneur (51") est pourvu de pignons (516), l'autre étant pourvu de crémaillères (517) s'étendant le long de la première direction (F1), et, quand l'actionneur (51") est installé en place, les pignons (516) engagent les crémaillères (517) pour amener l'actionneur (51") à se déplacer dans la première direction (F1).

2. Assemblage de boîtier selon la revendication 1, dans lequel le nombre de pignons (516) est au moins de deux, les pignons (516) étant agencés le long d'une seconde direction (F2) perpendiculaire à la première direction (F1), de préférence, les crémaillères (517) étant en correspondance univoque avec les pignons (516), et de préférence, au moins deux pignons (516) étant en rotation dans des directions opposées quand l'actionneur (51") se déplace.

3. Assemblage de boîtier selon la revendication 2, dans lequel au moins deux pignons (516) sont en rotation dans des directions opposées quand l'actionneur (51") se déplace, et de préférence, deux pignons (516) qui sont en rotation dans des directions opposées s'engrènent, ou deux pignons (516) qui sont en rotation dans des directions opposées s'engrènent respectivement avec un côté de la même crémaillère (517).

4. Assemblage de boîtier selon l'une quelconque des revendications 1 à 3, dans lequel le boîtier a une première chambre de réception fermée et une seconde chambre de réception ouverte (14") situées sur une extrémité, les batteries (20) sont prévues dans la première chambre de réception, les pignons (516) ou les crémaillères (517) sont prévus dans la seconde chambre de réception (14"), et de préférence, l'actionneur (51") est conçu en tant que structure en plaque, et un côté intérieur de l'actionneur (51") vient en butée contre une surface d'extrémité du boîtier et couvre une ouverture de la seconde chambre de réception (14").

5. Bloc-batterie comprenant des batteries (20),
**caractérisé en ce qu'**il comprend en outre l'assemblage de boîtier selon l'une quelconque des revendications 1 à 4, qui reçoit les batteries (20).
